# EUROPÄISCHE PATENTSCHRIFT

(11) **EP 4 189 126 B1**
(45) Veröffentlichungstag und Bekanntmachung des Hinweises auf die Patenterteilung: **05.06.2024**
(21) Anmeldenummer: 21749539.9
(22) Anmeldetag: 13.07.2021
(51) Int. Cl.: C21C 5/46, C21C 5/32, F27D 3/16, C21C 5/52, F27B 3/22, F27D 99/00

(54) **VERFAHREN ZUM GLEICHZEITIGEN EINBLASEN EINES BRENNGASES UND EINES SAUERSTOFFREICHEN GASES IN EIN AGGREGAT**
METHOD FOR SIMULTANEOUSLY INJECTING A FUEL GAS AND AN OXYGEN-RICH GAS INTO AN AGGLOMERATE
PROCÉDÉ D'INJECTION SIMULTANÉE D'UN GAZ COMBUSTIBLE ET D'UN GAZ RICHE EN OXYGÈNE DANS UN AGGLOMÉRAT

(30) Priorität: 03.08.2020 DE 102020209756; 06.01.2021 DE 102021200059
(43) Veröffentlichungstag der Anmeldung: 07.06.2023
(73) Patentinhaber: SMS Group GmbH, 40237 Düsseldorf (DE)
(72) Erfinder: ODENTHAL, Hans-Jürgen, 40822 Mettmann (DE); KEMMINGER, Andreas, 40213 Düsseldorf (DE); STARKE, Peter, 47228 Duisburg (DE); NÖRTHEMANN, Ralf, 45549 Sprockhövel (DE)
(74) Vertreter: Kross, Ulrich
(86) Internationale Anmeldenummer: PCT/EP2021/069475
(87) Internationale Veröffentlichungsnummer: WO 2022/028823

(56) Entgegenhaltungen:
- DE-A1-102018 208 433
- US-A1- 2002 035 892
- US-A1- 2008 000 325

## Beschreibung

Die vorliegende Erfindung betrifft ein Verfahren zum gleichzeitigen Einblasen eines Brenngases und eines sauerstoffreichen Gases in ein Aggregat, vorzugsweise in ein metallurgisches Einschmelzaggregat, mittels eines Brenners, die Verwendung des erfindungsgemäßen Verfahrens zur Einstellung eines Flammenmusters des Brenners als auch die Verwendung eines Brenners, der eine als Überschalldüse ausgelegte Primärdüse zum Einblasen des sauerstoffreichen Gases und eine als Unterschalldüse ausgelegte, koaxial zur Primärdüse angeordnete, Koaxialdüse mit einer ringförmigen Austrittsöffnung zum Einblasen des Brenngases umfasst.

Aus dem Stand der Technik sind Injektoren zum Auf- und Einblasen von sauerstoffreichem Gas in eine Metallschmelze mit dem Ziel, die Metallschmelze zu entkohlen und gleichzeitig eine reaktionsfähige, schützende Schaumschlackenschicht über der Metallschmelze aufzubauen, bereits bekannt. Solche Injektoren dienen ferner dazu, durch das gezielte Einbringen an chemischer Energie in Form von brennbaren Gasen, den anfänglich im Einschmelzaggregat, wie beispielsweise in einem EAF, vorhandenen Schrott aufzuschmelzen. Moderne Injektoren können dabei zwischen zwei Verfahrensmodi, d. h. zwischen einem Injektorbetrieb und einem Brennerbetrieb, umschalten.

Ein entsprechender Injektor ist beispielsweise aus der WO 2015/004182 A1 bekannt, der eine als Überschalldüse ausgelegten Primärdüse zum Aufblasen eines sauerstoffreichen Gases auf eine Metallschmelze und eine koaxial zur Primärdüse angeordnete Sekundärdüse zum Erzeugen eines den aus der Primärdüse austretenden Gasstrahl umgebenden Koaxialstrahls umfasst, wobei die Primärdüse einen konvergenten Abschnitt und einen divergenten Abschnitt aufweist, welche in einem Radius des engsten Querschnitts r* aneinander angrenzen, und wobei die Primärdüse und die Sekundärdüse durch eine Schar von Düsenformen in deren jeweiligem Auslegungsfall definiert werden.

Die Patentdokumente US 2002/035892 A1 und US 2008/000325 A1 offenbaren ähnliche Verfahren zum gleichzeitigen Einspritzen eines Brenngases und eines sauerstoffreichen Gases in ein Agglomerat.

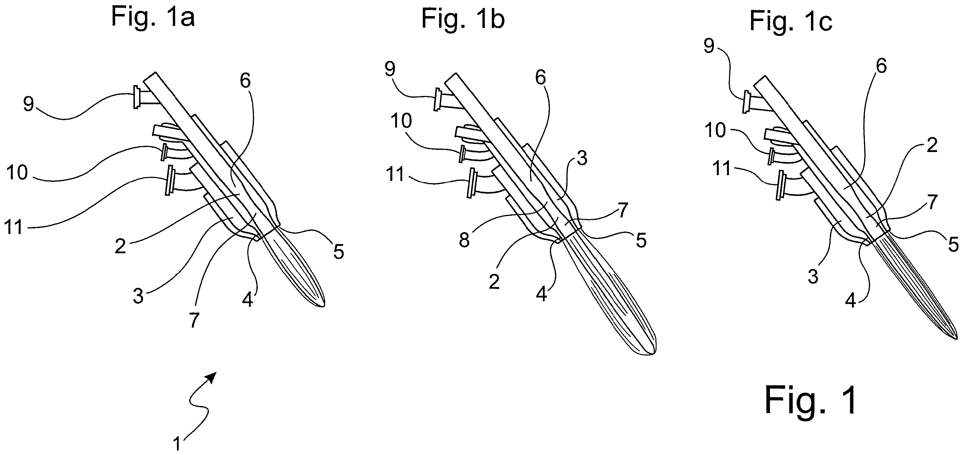

In der Praxis kann ein derartiger Injektor in unterschiedlichen Phasen arbeiten, die in den Figuren 1a bis 1c dargestellt sind.

Der Pilotmodus, Figur 1a, ist ein Bereitschaftsmodus und bei inaktivem Injektor vorgesehen. Die Pilotflamme besteht aus dem Verbrennungsgas des Erdgasbrenners, das mit einer Zündkerze gezündet wird. Die Flammenüberwachung erfolgt mit einer Ionisationselektrode mit Auswerteelektronik. Die Pilotflamme vermeidet, dass Schlacken- und Schmelzentropfen am Injektor anhaften. Die spezielle Düsengeometrie mit der zurückgezogenen, zentralen Primärdüse und dem konzentrisch angeordneten Ringspalt verhindert das Verstopfen der Düse durch Spritzeffekte seitens der Metallschmelze und der Schlacke.

Im Brennermodus, Figur 1b, kann dem Einschmelzaggregat thermische Energie zugeführt werden. Sauerstoff und Erdgas werden unverbrannt durch den Injektor gefördert und vermischen sich im Ofen zu einem brennbaren Gemisch, das durch die Ofenatmosphäre zündet. Eine separate Zündung mittels Zündkerze ist nicht erforderlich. Die leistungsstarke Flamme unterstützt das Einschmelzen des Schrottes in kalten Bereichen und homogenisiert das Einschmelzbild. Anordnung und Steuerung der Brenner werden ganzheitlich betrachtet und aufeinander abgestimmt.

In der Flachbadphase wird auf den sog. Injektormodus, Figur 1c, umgeschaltet. Zur schnellen Entkohlung der Metallschmelze ist die optimale Wechselwirkung von Sauerstoff und Metallschmelze ausschlaggebend. Dies wird erreicht durch einen Überschallstrahl, der mit etwa zweifacher Schallgeschwindigkeit aus der Düse austritt und mit hohem Impuls auf die Metallschmelze trifft. Der integrierte Heißgaserzeuger liefert, ähnlich wie beim Pilotmodus, einen Hüllstrahl aus heißem Verbrennungsgas, das den kalten Sauerstoffstrahl umhüllt und dadurch die Länge des Überschallbereiches vergrößert.

In der Praxis hat sich gezeigt, dass die drei unterschiedlichen Modi, in denen ein solcher Injektor arbeiten kann, neueren Anforderungen nicht mehr gerecht wird.

Der vorliegenden Erfindung liegt daher die Aufgabe zu Grunde, ein Verfahren zum gleichzeitigen Einblasen eines Brenngases und eines sauerstoffreichen Gases in ein Aggregat, insbesondere ein metallurgisches Einschmelzaggregat, mittels eines Brenners bereitzustellen, das in dem Brennermodus einen Betrieb in einem Auslegungszustand und in einem sog. Off-Design-Modus erlaubt.

Erfindungsgemäß wird die Aufgabe durch ein Verfahren mit den Merkmalen des Patentanspruchs 1 gelöst.

Das erfindungsgemäße Verfahren ist zum gleichzeitigen Einblasen eines Brenngases und eines sauerstoffreichen Gases in ein Aggregat, vorzugsweise ein metallurgisches Einschmelzaggregat, mittels eines Brenners vorgesehen. Der Brenner umfasst eine als Überschalldüse ausgelegte Primärdüse zum Einblasen des sauerstoffreichen Gases und eine als Unterschalldüse ausgelegte, koaxial zur Primärdüse angeordnete, Koaxialdüse mit einer ringförmigen Austrittsöffnung zum Einblasen des Brenngases, wobei die Primärdüse einen konvergenten Abschnitt und einen divergenten Abschnitt aufweist, welche in einem Radius des engsten Querschnitts aneinander angrenzen und wobei die ringförmige Austrittsöffnung an einer Stirnfläche des Injektors angeordnet ist. Das Brenngas wird erfindungsgemäß in Form von Wasserstoff oder in Form einer Brenngasmischung aus Wasserstoff und einem kohlenwasserstoffhaltigen Gas, insbesondere Erdgas, bezogen auf eine ausgelegte thermische Leistung des Brenners mit einem festen Eintrittsdruck und einem festen Eintrittsvolumenstrom eingeblasen, wohingegen der Eintrittsdruck und der Eintrittsvolumenstrom des sauerstoffreichen Gases je nach Anwendungsfall variiert werden.

In gleicher Weise sieht die Erfindung die Verwendung des erfindungsgemäßen Verfahrens zur Einstellung eines Flammenmusters des Brenners vor.

In einem weiteren Aspekt sieht die Erfindung zudem die Verwendung eines Brenners vor, der eine als Überschalldüse ausgelegte Primärdüse zum Einblasen des sauerstoffreichen Gases und eine als Unterschalldüse ausgelegte, koaxial zur Primärdüse angeordnete, Koaxialdüse mit einer ringförmigen Austrittsöffnung zum Einblasen des Brenngases umfasst, wobei die Primärdüse einen konvergenten Abschnitt und einen divergenten Abschnitt aufweist, welche in einem Radius des engsten Querschnitts aneinander angrenzen und wobei die ringförmige Austrittsöffnung an einer Stirnfläche des Brenners angeordnet ist, zum gleichzeitigen Einblasen eines Brenngases und eines sauerstoffreichen Gases in ein metallurgisches Einschmelzaggregat, wobei das Brenngas in Form von Wasserstoff oder in Form einer Brenngasmischung aus Wasserstoff und einem kohlenwasserstoffhaltigen Gas, insbesondere Erdgas, bezogen auf eine ausgelegte thermische Leistung des Brenners mit einem festen Eintrittsdruck und einem festen Eintrittsvolumenstrom eingeblasen wird, wohingegen der Eintrittsdruck und der Eintrittsvolumenstrom des sauerstoffreichen Gases je nach Anwendungsfall variiert werden.

Mit dem erfindungsgemäßen Verfahren wird reiner Wasserstoff oder ein Brenngasgemisch aus Wasserstoff und einem kohlenwasserstoffhaltigen Gas dem Aggregat eingeblasen. Die Brenngasgemische werden individuell im Bereich von 1 bis 100 Vol.-% vorgemischt, beispielsweise in einer Ventilstation, und über die Koaxialdüse in das Aggregat eingeblasen, wo das Brenngas oder das Brenngasgemisch gezündet werden kann.

Ein Vorteil der Beimischung von Wasserstoff zu dem kohlenwasserstoffhaltigen Gas besteht darin, dass auf zukünftig ansteigende CO₂-Bepreisung flexibel reagiert werden kann.

Bezogen auf die ausgelegte thermische Leistung des Brenners wird das entsprechende Brenngas mit einem festen Eintrittsdruck und einem festen Eintrittsvolumenstrom eingeblasen, wohingegen der Eintrittsdruck und der Eintrittsvolumenstrom des sauerstoffreichen Gases je nach Anwendungsfall variieren. Durch die gezielte Einstellung des Eintrittsdrucks sowie des Eintrittsvolumenstroms des sauerstoffreichen Gases entsteht ein komplexes Stoßmuster außerhalb des Brenners, das die Vermischung mit dem umgebenden Brenngas beeinflusst und somit kontrolliert. Dies erlaubt beispielsweise eine verzögerte Vermischung von Brenngas und sauerstoffreichen Gas, so dass diese erst stromabwärts des Brenneraustritts zündet und die Verbrennung bei niedrigeren Verbrennungstemperaturen stattfinden kann. Sofern eine stickstoffhaltige Atmosphäre in dem Einschmelzaggregat vorherrscht, kann hierdurch die Bildung von thermischen NOX-Gasen signifikant reduziert werden.

Durch das erfindungsgemäße Verfahren kann der Brenner gezielt in dem sogenannten Auslegungszustand sowie im nicht-angepassten Zustand (Off-Design-Modus) betrieben werden, wodurch der Brenner hinsichtlich der Brennerleistung als auch des Flammenbilds gezielt verstellt bzw. geregelt werden kann.

Ein Auslegungszustand liegt vor, wenn bei einer korrekt ausgelegten Lavaldüse der tatsächliche Eintrittsdruck und der Eintrittsvolumenstrom dem so genannten Auslegungsdruck und Auslegungsvolumenstrom entsprechen. Der Druck am Austritt der Primärdüse entspricht sodann dem Umgebungsdruck. Im Auslegungszustand tritt das sauerstoffreiche Gas mit maximalem Impulsstrom aus der Primärdüse aus, wobei die Struktur des sog. Überschallfreistrahles - gegenüber dem klassischen Unterschallfreistrahl - ungestört und kohärent ausgebildet ist. Folglich ist auch dessen Flammenlänge maximal. Das Flammenbild ist daher wenig pulsierend.

Im Auslegungszustand findet eine verzögerte Verbrennung des Brenngases statt, die folglich zu einer niedrigeren Verbrennungstemperatur und zu einer niedrigeren thermischen Belastung von Brenner und der Feuerfestauskleidung des Einschmelzaggregats führt. Ein weiterer Vorteil sind die niedrigeren NOX-Werte.

Der nicht-angepasste Zustand (Off-Design-Modus) führt hingegen zu einer intensiveren Vermischung von Brenngas und sauerstoffreichen Gas durch großräumige Wirbelstrukturen und Transport des gut durchmischten, zündfähigen Gasgemisches entfernt von der Brennerspitze, wodurch ebenfalls eine niedrigere thermische Belastung des Brenners gewährleistet werden kann. Im Gegensatz zum Auslegungszustand weist das Flammenbild ein räumlich und zeitlich unruhigeres, instationäres Betriebsverhalten auf. Durch sukzessive Reduzierung oder Erhöhung des Eintrittsdrucks und des Eintrittsvolumenstroms kann das Flammenbild gezielt verändert werden.

In dem nicht-angepassten Zustand (Off-Design-Modus) kann der Brenner in einem über- oder einem unterexpandierten Zustand betrieben werden.

Ein überexpandierter Zustand kennzeichnet sich durch einen im Vergleich zum Auslegungsdruck kleineren Eintrittsdruck am Eingang der Primärdüse aus. Das sauerstoffreiche Gas expandiert am Austritt der Primärdüse stärker als durch den Auslegungszustand vorgesehen, so dass sich sog. Verdichtungsstöße ausbilden. Hierdurch wird mehr Brenngas in das sauerstoffreiche Gas bzw. den Oxidator-Freistrahl eingezogen und es kommt zu einer deutlich früheren Verbrennung.

Ist hingegen der Eintrittsdruck im Vergleich zum Auslegungsdruck größer, so liegt der sog. unterexpandierte Zustand vor. An der Austrittskante der Primärdüse setzen Expansionswellen an und der Oxidator-Freistrahl erweitert sich außerhalb der Primärdüse. Auch in dem unterexpandierten Zustand mischt sich das koaxial ausströmende Brenngas intensiv mit dem sauerstoffreichen Gas derart, dass die Flamme gegenüber dem überexpandierten Zustand noch kürzer und noch breiter wird.

Somit kann erfindungsgemäß in bestimmten Situationen der Auslegungszustand gezielt verlassen werden, um eine kurze oder eine noch kürzere Flamme im Brennermodus zu erzeugen, beispielsweise um Schrott in der Nähe einer Reaktorwand des Einschmelzaggregats einzuschmelzen.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Der Brenner kann auch wahlweise im Injektormodus oder im Pilotmodus, wie dies zuvor erläutert worden ist, betrieben werden.

Unter dem Begriff "Aggregat" wird im Sinne der vorliegenden Erfindung jegliches Aggregat verstanden, das zum Einschmelzen von metallischen, nichteisenmetallischen sowie nicht-metallischen Schrotten und/oder Materialien, zum Überhitzen der jeweiligen Schmelzen und/oder zum Warmhalten genutzt werden kann. Die genannten Schrotte und/oder Materialien können Eisen, Kupfer, Stahl, Aluminium, diverse Edelmetalle, Elektroschrotte, Gläser, Glasreste sowie diverse Kunststoffe umfassen.

Bevorzugte Einschmelzaggregate sind daher ausgewählt aus der Reihe umfassend einen Basic Oxygen Furnace (BOF), einen Argon Oxygen Decarburization Konverter (AOD), einen Submerged Arc Furnace (SAF), einen Elektrolichtbogenofen (EAF), einen Shaft Arc Furnace (SHARC), einen Primary Energy Melter (PEM), einen Converter Arcing (CONARC), einen Hubbalkenofen, einen Hubherdofen, einen Stoßofen, einen Einkammerschmelz- und Gießofen, einen Mehrkammerofen, einen Drehtrommelkippofen (URTF), eine Kompaktumschmelzanlage (CTRP), einen Späneumschmelzofen, einen Top Blown Rotary Refiner (TBRR), einen Peirce Smith Converter (PSC), einen Anodenofen, einen Trommelofen, einen Schachtofen, einen Kupolofen, einen Herdofen, ein Tilting Furnace, einen Kivcet Ofen, einen Badschmelzofen und/oder einen Hafenofen.

Das sauerstoffreiche Gas kann ausgewählt sein aus Sauerstoff, Luft oder sauerstoffangereicherter Luft.

In einer vorteilhaften Ausführungsvariante wird der Eintrittsdruck des sauerstoffreichen Gases bezogen auf den Eintrittsdruck des Brenngases um einen Faktor im Bereich von 2 bis 12, bevorzugt um einen Faktor im Bereich von 3 bis 10, mehr bevorzugt um einen Faktor im Bereich von 4 bis 9.5 variiert. Der Eintrittsvolumenstrom des sauerstoffreichen Gases wird bezogen auf den Eintrittsvolumenstrom des Brenngases vorzugsweise um einen Faktor im Bereich von 1.05 bis 2.0, mehr bevorzugt um einen Faktor im Bereich von 1.10 bis 1.90, noch mehr bevorzugt um einen Faktor im Bereich von 1.20 bis 1.80 variiert.

In einer weiteren vorteilhaften Ausführungsvariante wird das sauerstoffreiche Gas bezogen auf einen Auslegungszustand des Brenners mit einem Eintrittsdruck im Bereich von 0.50 bis 1.50, bevorzugt mit einem Eintrittsdruck im Bereich von 0.60 bis 1.40 eingeblasen.

Weiterhin ist vorteilhaft vorgesehen, dass das sauerstoffreiche Gas bezogen auf einen Auslegungszustand des Brenners mit einem Eintrittsvolumenstrom im Bereich von 0.50 bis 1.50, bevorzugt mit einem Eintrittsvolumenstrom im Bereich von 0.60 bis 1.40, mehr bevorzugt mit einem Eintrittsvolumenstrom im Bereich von 0.70 bis 1.30, noch mehr bevorzugt mit einem Eintrittsvolumenstrom im Bereich von 0.80 bis 1.20 eingeblasen wird.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Figuren 1a bis 1c: eine Ausführungsvariante eines Brenners in unterschiedlichen Betriebsphasen,
- Figuren 2a bis 2c: eine schematische Darstellung der unterschiedlichen Zustände des Brenners,
- Figuren 3a und 3b: eine Gegenüberstellung eines Flammenbildes im Auslegungs- und überexpandiertem Zustand, und
- Figur 4a und 4b: eine grafische Darstellung der ermittelten Werte der jeweiligen Flammen aus den Figuren 3a/3b in einem Diagramm.

In den Figuren 1a bis 1c ist eine Ausführungsvariante eines Brenners 1 in unterschiedlichen Betriebsphasen gezeigt. Der Brenner 1 ist zum gleichzeitigen Einblasen eines Brenngases und eines sauerstoffreichen Gases geeignet und umfasst eine als Überschalldüse ausgelegte Primärdüse 2 zum Einblasen des sauerstoffreichen Gases und eine als Unterschalldüse ausgelegte, koaxial zur Primärdüse 2 angeordnete, Koaxialdüse 3 mit einer ringförmigen Austrittsöffnung 4, die an einer Stirnfläche 5 des Brenners 1 angeordnet ist. Wie anhand der Darstellung gezeigt, weist die Primärdüse 2 einen konvergenten Abschnitt 6 und einen divergenten Abschnitt 7 auf, welche in einem Radius des engsten Querschnitts 8 aneinander angrenzen. Die Primärdüse 2 weist im hinteren Bereich des Brenners 1 einen Anschluss 9 auf, über den das sauerstoffreiche Gas, wie beispielsweise reiner Sauerstoff von einer Ventilstation (nicht dargestellt) dem Brenner 1 zugeleitet werden kann. Die Koaxialdüse 3 weist in der vorliegend dargestellten Ausführungsvariante zwei Anschlüsse 10, 11 auf. Über den hinteren Anschluss 10 kann das Brenngas und über den vorderen Anschluss 11 kann Luft dem Brenner 1 zugeführt werden. Im Brennermodus kann das Brenngas auch über den Anschluss 11 dem Brenner 1 zugeführt werden.

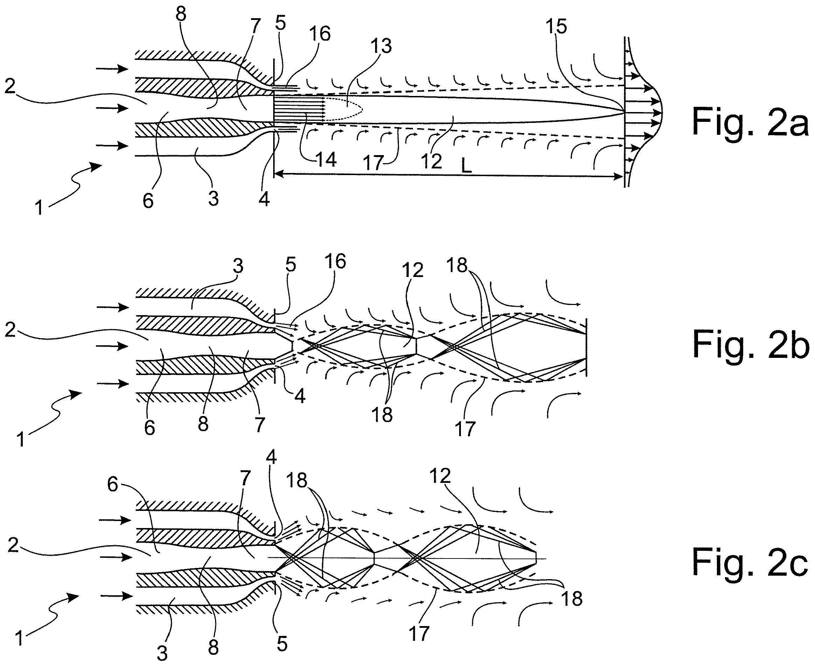

In den Figuren 2a bis 2c ist eine schematische Darstellung der unterschiedlichen Zustände mit den entsprechendem Flammenbild des Brenners 1 dargestellt.

Figur 2a zeigt den Auslegungszustand. Der Auslegungszustand liegt vor, wenn bei einer korrekt ausgelegten Lavaldüse 2 der tatsächliche Eintrittsdruck und der Eintrittsvolumenstrom dem so genannten Auslegungsdruck und Auslegungsvolumenstrom entspricht. Der Druck am Austritt der Primärdüse 2 entspricht sodann dem Umgebungsdruck. Im Auslegungszustand tritt das sauerstoffreiche Gas mit maximalem Impulsstrom aus der Primärdüse aus, wobei die Struktur des sog. Überschallfreistrahles 12 - gegenüber dem klassischen Unterschallfreistrahl - ungestört und kohärent ausgebildet ist. Folglich ist auch dessen Länge L maximal. Das Flammenbild ist daher wenig pulsierend.

Direkt hinter dem Austritt der Primärdüse 2 bildet sich ein Freistrahlkern 13 aus, in dem die Strömungsgeschwindigkeit, der Druck sowie die Temperatur annähernd konstant sind. Dieses Verhalten wird in Figur 2a durch das homogene Geschwindigkeitsprofil 14 angedeutet, welches im Auslegungszustand maximal ist. Stromabwärts des Freistrahlkerns 13 sinken die Strömungsgeschwindigkeit, der Druck sowie die Temperatur infolge der zunehmenden Reibungs- bzw. Dissipationseffekte bis der Überschallfreistrahl 12 der Länge L im Punkt 15 vom Überschall- in den Unterschallzustand übergeht. Der Punkt 15 kennzeichnet folglich die Stelle, an der die Machzahl gleich Eins ist (Ma =1). Der koaxial und parallel zur Primärdüse 2 aus der Koaxialdüse 3 austretende, vorgemischte Brenngas-Freistrahl 16 vermischt sich zunächst nur wenig mit dem deutlich schnelleren sauerstoffreichen Strahl, d. h. das Brenngas wird über die zunächst kleinen Wirbelstrukturen in einer Freistrahl-Scherschicht 17 nur mäßig mitgerissen. Diese Freistrahl-Scherschicht 17 kennzeichnet die Trennschicht zwischen Primär- und Sekundärstrahl 12, 16. Die Wirbelgröße in der Freistrahl-Scherschicht 17 bleibt über eine mehr oder weniger lange Distanz konstant, ehe die Wirbelgröße zunimmt und vermehrt Brenngas in einzieht. Der gesamte Strahl, d.h. der Primär- und Sekundärstrahl 12, 16, verbreitert sich und wird langsamer. Die gebildete Flamme ist lang, effizient und das Temperaturmaximum liegt deutlich entfernt vom Brenner 1, was dem Schutz des Brenners 1 und dessen unmittelbarer Umgebung in dem Einschmelzaggregat dient. Der Brennermodus gemäß Figur 2a kann vornehmlich zum Überhitzen und Warmhalten einer Schmelze über eine lange Distanz eingesetzt werden.

In Figur 2b ist ein überexpandierter Zustand gezeigt. Dieser kennzeichnet sich durch einen im Vergleich zum Auslegungsdruck kleineren Eintrittsdruck aus. Das sauerstoffreiche Gas expandiert am Austritt der Primärdüse 2 stärker als durch den Auslegungszustand vorgesehen, so dass sich sog. Verdichtungsstöße ausbilden. Hierdurch wird mehr Brenngas in das sauerstoffreiche Gas bzw. den Oxidator-Freistrahl eingezogen und es kommt zu einer deutlich früheren Verbrennung.

Ein Verdichtungsstoß ist mit einer unstetigen Änderung von Druck, Temperatur, Dichte, Entropie, Machzahl und Strömungsgeschwindigkeit verbunden. Während der Druck, die Temperatur, Dichte und Entropie zunehmen, sinken die Machzahl und Strömungsgeschwindigkeit ab. Der Freistrahl 12 schnürt sich ein und der Druck im Zentrum des Freistrahls 12 steigt stromabwärts auf Werte über den Umgebungsdruck an. Die schrägen Kompressionswellen 18 werden am Freistrahlrand 17 als Expansionswellen reflektiert und der statische Druck im Freistrahl 12 sinkt. Dieser Vorgang wiederholt sich periodisch, bis die wachsenden Mischungszonen am Freistrahlrand 17 das Strömungsfeld beherrschen und der Überschallfreistrahl 17 in einen Unterschallfreistrahl überführt wird.

Die Strömungszustände beeinflussen in erheblichem Maße die Vermischung mit dem koaxial strömenden Sekundärstrahl 16. Durch die stromabwärts zunehmende Wechselwirkung zwischen den sich überlagernden Kompressions- und Expansionswellen 18 sowie zwischen dem sauerstoffreichen Gas und Brenngas, wird mehr Brenngas in den Freistrahl 12 eingezogen, so dass es zu einer deutlich früheren Verbrennung kommt. Die Flamme wird kürzer als im Auslegungszustand.

Ist hingegen der Eintrittsdruck im Vergleich zum Auslegungsdruck größer, so liegt der sog. unterexpandierte Zustand vor (Fig. 2c). An der Austrittskante der Primärdüse 2 setzen Expansionswellen 18 an und der Freistrahl 12 erweitert sich außerhalb der Primärdüse 2. Auch in dem unterexpandierten Zustand mischt sich das koaxial ausströmende Brenngas intensiv mit dem sauerstoffreichen Gas derart, dass die Flamme gegenüber dem überexpandierten Zustand noch kürzer und noch breiter wird.

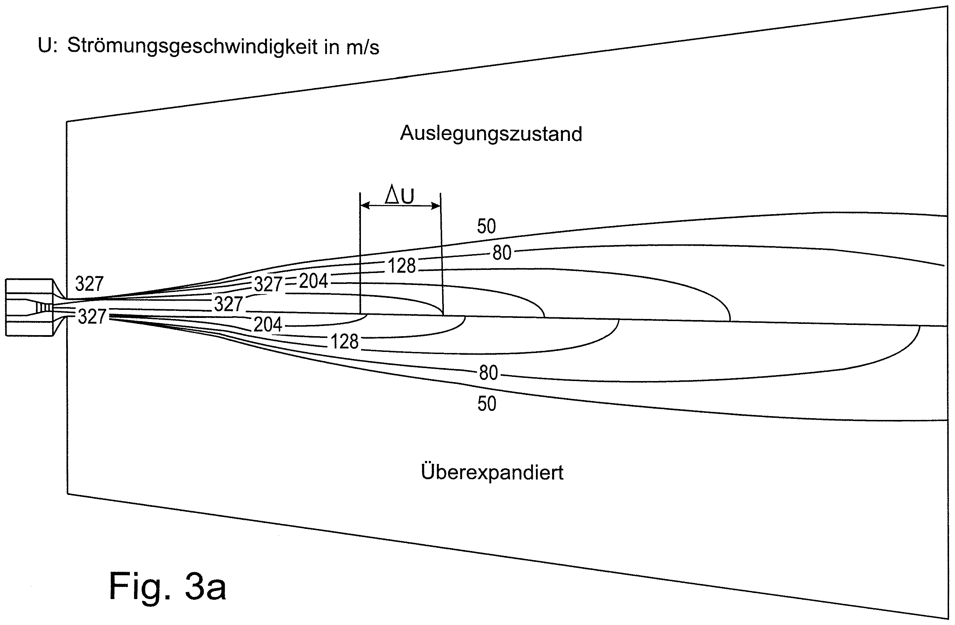

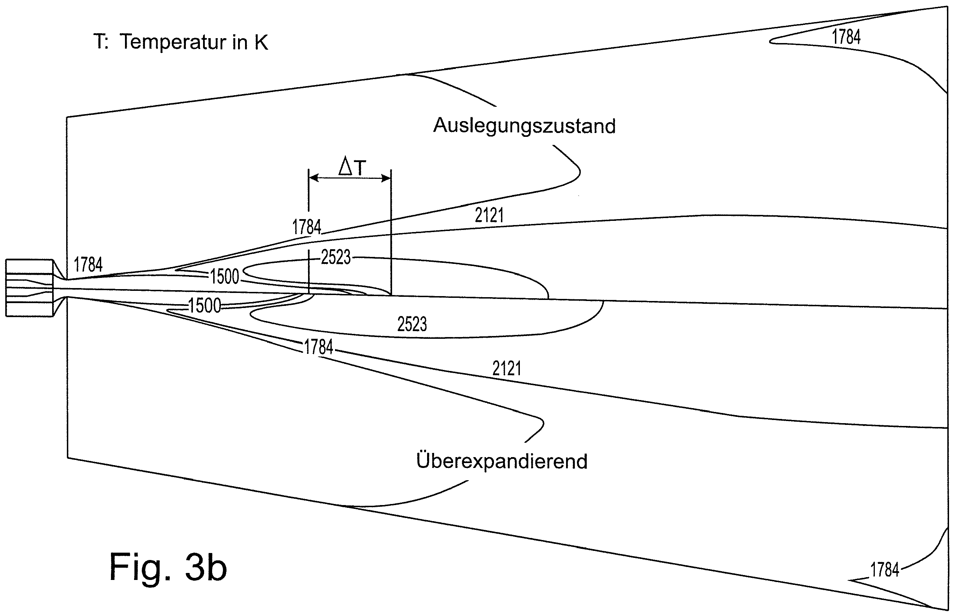

In den Figuren 3 bis 4 sind Ergebnisse einer CFD-Simulation für das erfindungsgemäße Verfahren gezeigt. Für die Simulation wurden die folgenden Paramater eingesetzt.

| | |
|---|---|
| Brennerleistung: | 5 MW |
| Durchmesser des engsten Querschnitts der Primärdüse: | 15.4 mm |
| Austrittsdurchmesser der Primärdüse: | 21.3 mm |
| Spalthöhe am Austritt der Koaxialdüse: | 6.1 mm |

Für den Auslegungszustand wurde das Brenngas, welches aus einem 50/50 Vol.-% Gemisch aus Wasserstoff und Methan bestand, mit einem Eintrittsvolumenstrom von 773 Nm³/h und bei einem Druck von 1.2 bar eingeblasen. Das sauerstoffreiche Gas (100 Vol.-% Sauerstoff) wurde mit einem Eintrittsvolumenstrom von 1159 Nm³/h und bei einem Druck von 8.3 bar eingeblasen. Diese Werte entsprechen einem Lambda Wert von 1.2.

Für den überexpandierten Zustand wurde das sauerstoffreiche Gas (100 Vol.-% Sauerstoff) sodann mit einem Eintrittsvolumenstrom von 774 Nm³/h und bei einem Druck von 5.1 bar eingeblasen. Diese Werte entsprechen einem Lambda Wert von 1.0.

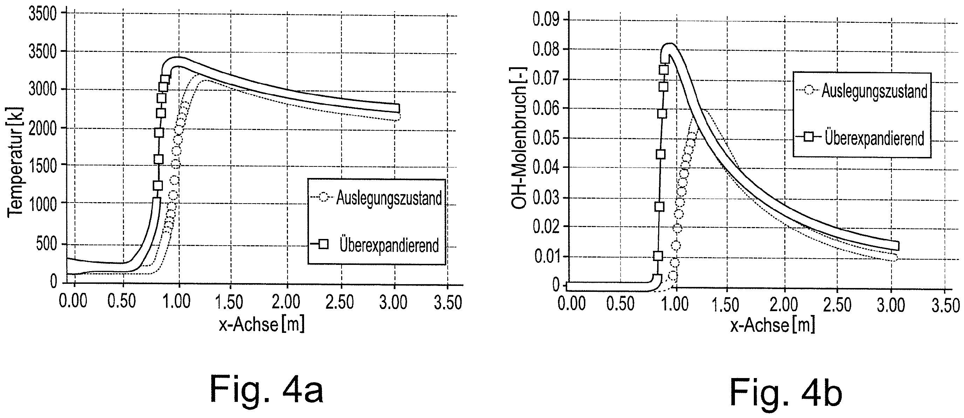

Die Figuren 3a und 3b zeigen die Strömungsgeschwindigkeiten der beiden simulierten Flammen (Fig. 3a) sowie das Temperaturfeld (Fig. 3b). Wie anhand der Figuren erkennbar, bildet sich im überexpandierenden Zustand eine deutlich kürzere Flamme aus, da es frühzeitig zu einer Vermischung und Zündung von Brenngas und Sauerstoff kommt. Die Figuren 4a und 4b zeigen die grafische Darstellung der ermittelten Werte der jeweiligen Flammen aus den Figuren 3a und 3b. Es wird außerdem die OH-Konzentration und die Flammtemperatur entlang der Flammenmittellinie gezeigt. Je nach Definition der Flammenlänge kommt es zu einer Reduktion im Bereich von 20 bis 24 % durch das Betreiben des Brenners 1 im überexpandierenden Modus.

### Bezugszeichenliste

- 1: Brenner
- 2: Primärdüse / Lavaldüse
- 3: Koaxialdüse
- 4: Austrittsöffnung
- 5: Stirnfläche
- 6: konvergenter Abschnitt
- 7: divergenter Abschnitt
- 8: Radius des engsten Querschnitts
- 9: Anschluss für sauerstoffreiches Gas
- 10: Anschluss für Brenngas
- 11: Anschluss für Luft / Brenngas
- 12: Überschallfreistrahl / Primärstrahl / Freistrahl
- 13: Freistrahlkern
- 14: Geschwindigkeitsprofil
- 15: Punkt
- 16: Brenngas-Freistrahl / Sekundärstrahl
- 17: Freistrahl-Scherschicht / Freistrahlrand
- 18: Kompressionswellen

- L: Länge

## Patentansprüche

1. Verfahren zum gleichzeitigen Einblasen eines Brenngases und eines sauerstoffreichen Gases in ein Aggregat, vorzugsweise in ein metallurgisches Einschmelzaggregat, mittels eines Brenners (1), der eine als Überschalldüse ausgelegte Primärdüse (2) zum Einblasen des sauerstoffreichen Gases und eine als Unterschalldüse ausgelegte, koaxial zur Primärdüse (2) angeordnete, Koaxialdüse (3) mit einer ringförmigen Austrittsöffnung (4) zum Einblasen des Brenngases umfasst, wobei die Primärdüse (2) einen konvergenten Abschnitt (6) und einen divergenten Abschnitt (7) aufweist, welche in einem Radius des engsten Querschnitts (8) aneinander angrenzen und wobei die ringförmige Austrittsöffnung (4) an einer Stirnfläche (5) des Brenners (1) angeordnet ist, wobei das Brenngas in Form von Wasserstoff oder in Form einer Brenngasmischung aus Wasserstoff und einem kohlenwasserstoffhaltigen Gas, insbesondere Erdgas, bezogen auf eine ausgelegte thermische Leistung des Brenners (1) mit einem festen Eintrittsdruck und einem festen Eintrittsvolumenstrom eingeblasen wird, wohingegen der Eintrittsdruck und der Eintrittsvolumenstrom des sauerstoffreichen Gases je nach Anwendungsfall variiert werden.

2. Verfahren nach Anspruch 1, wobei der Eintrittsdruck des sauerstoffreichen Gases bezogen auf den Eintrittsdruck des Brenngases um einen Faktor im Bereich von 2 bis 12, bevorzugt um einen Faktor im Bereich von 3 bis 10, mehr bevorzugt um einen Faktor im Bereich von 4 bis 9.5 variiert wird.

3. Verfahren nach Anspruch 1 oder 2, wobei der Eintrittsvolumenstrom des sauerstoffreichen Gases bezogen auf den Eintrittsvolumenstrom des Brenngases um einen Faktor im Bereich von 1.05 bis 2.0, bevorzugt um einen Faktor im Bereich von 1.10 bis 1.90, mehr bevorzugt um einen Faktor im Bereich von 1.20 bis 1.80 variiert wird.

4. Verfahren nach einem der vorhergehenden Ansprüche, wobei das sauerstoffreiche Gas bezogen auf einen Auslegungszustand des Brenners (1) mit einem Eintrittsdruck im Bereich von 0.50 bis 1.50, bevorzugt mit einem Eintrittsdruck im Bereich von 0.60 bis 1.40 eingeblasen wird.

5. Verfahren nach einem der vorhergehenden Ansprüche, wobei das sauerstoffreiche Gas bezogen auf einen Auslegungszustand des Brenners (1) mit einem Eintrittsvolumenstrom im Bereich von 0.50 bis 1.50, bevorzugt mit einem Eintrittsvolumenstrom im Bereich von 0.60 bis 1.40, mehr bevorzugt mit einem Eintrittsvolumenstrom im Bereich von 0.70 bis 1.30, noch mehr bevorzugt mit einem Eintrittsvolumenstrom im Bereich von 0.80 bis 1.20 eingeblasen wird.

6. Verfahren nach einem der vorhergehenden Ansprüche, wobei das Aggregat ausgewählt ist aus einem Basic Oxygen Furnace (BOF), einem Argon Oxygen Decarburization Konverter (AOD), einem Submerged Arc Furnace (SAF), einem Elektrolichtbogenofen (EAF), einem Shaft Arc Furnace (SHARC), einem Primary Energy Melter (PEM), einem Converter Arcing (CONARC), einem Hubbalkenofen, einem Hubherdofen, einem Stoßofen, einem Einkammerschmelz- und Gießofen, einem Mehrkammerofen, einem Drehtrommelkippofen (URTF), einer Kompaktumschmelzanlage (CTRP), einem Späneumschmelzofen, einem Top Blown Rotary Refiner (TBRR), einem Peirce Smith Converter (PSC), einem Anodenofen, einem Trommelofen, einem Schachtofen, einem Kupolofen, einem Herdofen, einem Tilting Furnace, einem Kivcet Ofen, einem Badschmelzofen und/oder einem Hafenofen.

7. Verwendung eines Verfahrens nach einem der vorhergehenden Ansprüche zur Einstellung eines Flammenmusters des Brenners (1).

8. Verwendung eines Brenners (1), der eine als Überschalldüse ausgelegte Primärdüse (2) zum Einblasen des sauerstoffreichen Gases und eine als Unterschalldüse ausgelegte, koaxial zur Primärdüse (2) angeordnete, Koaxialdüse (3) mit einer ringförmigen Austrittsöffnung (4) zum Einblasen des Brenngases umfasst, wobei die Primärdüse (2) einen konvergenten Abschnitt (6) und einen divergenten Abschnitt (7) aufweist, welche in einem Radius des engsten Querschnitts (8) aneinander angrenzen und wobei die ringförmige Austrittsöffnung (4) an einer Stirnfläche (5) des Brenners (1) angeordnet ist, zum gleichzeitigen Einblasen eines Brenngases und eines sauerstoffreichen Gases in ein Aggregat, wobei das Brenngas in Form von Wasserstoff oder in Form einer Brenngasmischung aus Wasserstoff und einem kohlenwasserstoffhaltigen Gas, insbesondere Erdgas, bezogen auf eine ausgelegte thermische Leistung des Brenners (1) mit einem festen Eintrittsdruck und einem festen Eintrittsvolumenstrom eingeblasen wird, wohingegen der Eintrittsdruck und der Eintrittsvolumenstrom des sauerstoffreichen Gases je nach Anwendungsfall variiert werden.

## Claims

1. Method for simultaneous injection of a combustion gas and an oxygen-rich gas into a unit, preferably into a metallurgical smelting unit, by means of a burner (1) comprising a primary nozzle (2), which is configured as an ultrasonic nozzle, for injection of the oxygen-rich gas and a coaxial nozzle (3), which is configured as an ultrasonic nozzle and arranged coaxially with respect to the primary nozzle (2), with an annular outlet opening (4) for injection of the combustion gas, wherein the primary nozzle (2) has a convergent section (6) and a divergent section (7) which adjoin one another at a radius of the narrowest cross-section (8) and wherein the annular outlet opening (4) is arranged at an end face (5) of the burner (1), wherein the combustion gas is injected in the form of hydrogen or in the form of a combustion gas mixture of hydrogen and a gas containing hydrocarbon, particularly natural gas, at a fixed entry pressure and fixed entry volume flow rate referred to a designed thermal performance of the burner (1), whereagainst the entry pressure and entry volume flow rate of the oxygen-rich gas are varied according to the respective application.

2. Method according to claim 1, wherein the entry pressure of the oxygen-rich gas is varied by a factor in the range of 2 to 12, preferably by a factor of in the range of 3 to 10, more preferably by a factor in the range of 4 to 9.5, referred to the entry pressure of the combustion gas.

3. Method according to claim 1 or 2, wherein the entry volume flow rate of the oxygen-rich gas is varied by a factor in the range of 1.05 to 2.0, preferably by a factor of in the range of 1.10 to 1.90, more preferably by a factor in the range of 1.20 to 1.80, referred to the entry volume flow rate of the combustion gas.

4. Method according to any one of the preceding claims, wherein the oxygen-rich gas is injected at an entry pressure in the range of 0.50 to 1.50, preferably at an entry pressure in the range of 0.60 to 1.40, referred to a design condition of the burner (1).

5. Method according to any one of the preceding claims, wherein the oxygen-rich gas is injected at an entry volume flow rate in the range of 0.50 to 1.50, preferably at an entry volume flow rate in the range of 0.60 to 1.40, more preferably at an entry volume flow rate in the range of 0.70 to 1.30, even more preferably at an entry volume flow rate in the range of 0.80 to 1.20, referred to a design condition of the burner (1).

6. Method according to any one of the preceding claims, wherein the unit is selected from a basic oxygen converter (BOF), an argon oxygen decarburisation converter (AOD), a submerged arc furnace (SAF), an electric arc furnace (EAF), a shaft arc furnace (SHARC), a primary energy melter (PEM), a converter arcing process (CONARC), a walking beam furnace, a lifting hearth furnace, a pusher furnace, a single-chamber smelting and casting furnace, a multi-chamber furnace, a universal rotary tilting furnace (URTF), a compact remelting plant (CTRP), a chip remelting furnace, a top blown rotary refiner (TBRR), a Pierce Smith converter (PSC), an anode furnace, a rotary furnace, a shaft furnace, a cupola furnace, a hearth furnace, a tilting furnace, a Kivcet furnace, a bath smelting furnace and/or a pot furnace.

7. Used of a method according to any one of the preceding claims for setting a flame pattern of the burner (1).

8. Use of a burner (1), comprising a primary nozzle (2), which is configured as an ultrasonic nozzle, for injection of the oxygen-rich gas and a coaxial nozzle (3), which is configured as an ultrasonic nozzle and arranged coaxially with respect to the primary nozzle (2), with an annular outlet opening (4) for injection of the combustion gas, wherein the primary nozzle (2) has a convergent section (6) and a divergent section (7) which adjoin one another at a radius of the narrowest cross-section (8) and wherein the annular outlet opening (4) is arranged at an end face (5) of the burner (1), for simultaneous injection of a combustion gas and an oxygen-rich gas into a unit, wherein the combustion gas is injected in the form of hydrogen or in the form of a combustion gas mixture of hydrogen and a gas containing hydrocarbon, particularly natural gas, at a fixed entry pressure and fixed entry volume flow rate referred to a designed thermal performance of the burner (1), whereagainst the entry pressure and entry volume flow rate of the oxygen-rich gas are varied according to the respective application.

## Revendications

1. Procédé pour l'injection simultanée d'un gaz combustible et d'un gaz riche en oxygène dans une unité, de préférence dans une unité de fusion métallurgique, au moyen d'un brûleur (1), qui comprend une buse primaire (2) conçue comme une buse supersonique pour l'injection du gaz riche en oxygène et une buse coaxiale (3) conçue comme une buse subsonique, disposée coaxialement à la buse primaire (2), avec une ouverture de sortie annulaire (4) pour l'injection du gaz combustible, la buse primaire (2) ayant une section convergente (6) et une section divergente (7) qui se rejoignent à un rayon de la section transversale la plus étroite (8), et l'ouverture de sortie annulaire (4) étant disposée sur une surface frontale (5) du brûleur (1), le gaz combustible étant injecté sous forme d'hydrogène ou sous forme d'un mélange de gaz combustible d'hydrogène et d'un gaz contenant des hydrocarbures, en particulier du gaz naturel, en fonction d'une puissance thermique conçue du brûleur (1) avec une pression d'entrée fixe et un débit volumique d'entrée fixe, tandis que la pression d'entrée et le débit volumique d'entrée du gaz riche en oxygène varient en fonction de l'application.

2. Procédé selon la revendication 1, où la pression d'entrée du gaz riche en oxygène par rapport à la pression d'entrée du gaz combustible varie par un facteur dans la plage de 2 à 12, de préférence par un facteur dans la plage de 3 à 10, plus préférablement par un facteur dans la plage de 4 à 9,5.

3. Procédé selon la revendication 1 ou 2, où le débit volumique d'entrée du gaz riche en oxygène par rapport au débit volumique d'entrée du gaz combustible varie par un facteur dans la plage de 1,05 à 2,0, de préférence par un facteur dans la plage de 1,10 à 1,90, plus préférablement par un facteur dans la plage de 1,20 à 1,80.

4. Procédé selon l'une quelconque des revendications précédentes, où le gaz riche en oxygène est injecté en fonction d'un état de conception du brûleur (1) avec une pression d'entrée dans la plage de 0,50 à 1,50, de préférence avec une pression d'entrée dans la plage de 0,60 à 1,40.

5. Procédé selon l'une quelconque des revendications précédentes, où le gaz riche en oxygène est injecté en fonction d'un état de conception du brûleur (1) avec un débit volumique d'entrée dans la plage de 0,50 à 1,50, de préférence avec un débit volumique d'entrée dans la plage de 0,60 à 1,40, plus préférablement avec un débit volumique d'entrée dans la plage de 0,70 à 1,30, encore plus préférablement avec un débit volumique d'entrée dans la plage de 0,80 à 1,20.

6. Procédé selon l'une quelconque des revendications précédentes, où l'unité est choisie parmi un four à oxygène de base (Basic Oxygen Furnace, BOF), un convertisseur de décarburation à l'argon et à l'oxygène (Argon Oxygen Decarburization Converter, AOD), un four à arc submergé (Submerged Arc Furnace, SAF), un four à arc électrique (EAF), un four à arc de puits (Shaft Arc Furnace, SHARC), un dispositif de fusion d'énergie primaire (Primary Energy Melter, PEM), un dispositif d'arc de convertisseur (Converter Arcing, CONARC), un four à poutre mobile, un four à foyer mobile, un four à chocs, un four de fusion et de coulée à une chambre, un four à plusieurs chambres, un four à tambour rotatif basculant (URTF), une installation de fusion compacte (CTRP), un four de fusion de copeaux, un raffineur rotatif à soufflage par le haut (Top Blown Rotary Refiner, TBRR), un convertisseur Peirce Smith (PSC), un four à anodes, un four à tambour, un four à puits, un four à coupole, un four à foyer, un four basculant, un four Kivcet, un four à fusion de bain et/ou un four à pot.

7. Utilisation d'un procédé selon l'une quelconque des revendications précédentes pour régler un motif de flamme du brûleur (1).

8. Utilisation d'un brûleur (1), qui comprend une buse primaire (2) conçue comme une buse supersonique pour l'injection du gaz riche en oxygène et une buse coaxiale (3) conçue comme une buse subsonique, disposée coaxialement à la buse primaire (2), avec une ouverture de sortie annulaire (4) pour l'injection du gaz combustible, la buse primaire (2) ayant une section convergente (6) et une section divergente (7) qui se rejoignent à un rayon de la section transversale la plus étroite (8), et l'ouverture de sortie annulaire (4) étant disposée sur une surface frontale (5) du brûleur (1), pour l'injection simultanée d'un gaz combustible et d'un gaz riche en oxygène dans une unité, le gaz combustible étant injecté sous forme d'hydrogène ou sous forme d'un mélange de gaz combustible d'hydrogène et d'un gaz contenant des hydrocarbures, en particulier du gaz naturel, en fonction d'une puissance thermique conçue du brûleur (1) avec une pression d'entrée fixe et un débit volumique d'entrée fixe, tandis que la pression d'entrée et le débit volumique d'entrée du gaz riche en oxygène varient en fonction de l'application.
